Europäisches Patentamt

European Patent Office

Office européen des brevets

(19)

(11) **EP 0 825 778 A2**

(12) **EUROPEAN PATENT APPLICATION**

(43) Date of publication:
**25.02.1998 Bulletin 1998/09**

(51) Int Cl.[6]: **H04N 7/36**

(21) Application number: **97306417.3**

(22) Date of filing: **22.08.1997**

(84) Designated Contracting States:
**AT BE CH DE DK ES FI FR GB GR IE IT LI LU MC NL PT SE**

(30) Priority: **22.08.1996 US 701442**

(71) Applicants:
• **CIRRUS LOGIC, INC.**
**Fremont, CA 94538-6423 (US)**
• **THE REGENTS OF THE UNIVERSITY OF CALIFORNIA**
**Oakland, California 94612-3550 (US)**

(72) Inventors:
• **Vargas, Raymond L.**
**Austin, Texas (US)**
• **Vetterli, Martin**
**1603 Grandvaux (CH)**

(74) Representative:
**Cross, Rupert Edward Blount et al**
**BOULT WADE TENNANT,**
**27 Furnival Street**
**London EC4A 1PQ (GB)**

(54) **Method for motion estimation**

(57)  Motion estimation (ME) is the process of determining the movements of objects between successive image frames of a video sequence. Motion-compensated (MC) image processing is the processing of images to account for the presence of motion. The present invention provides an efficient, accurate technique for motion estimation that is compatible with an MPEG video encoder and that overcomes the computational complexity of computing motion vectors using the mean square error matching criterion by reducing the computation to that of a multidimensional truncated convolution and a running sum of squares. Making use of fast convolution procedures, this method obtains the optimal motion estimate with worst-case run time comparable to the average run time of statistical speedup methods and to the run time achieved by sparse-search methods.

Figure 4

| p | p' | | | | | $v_0$ | $v_1$ | $v_2$ | $v_3$ | | | | | |
|---|---|---|---|---|---|---|---|---|---|---|---|---|---|---|
| -2 | 0 | | | | | $r_0$ | $r_1$ | $r_2$ | $r_3$ | $r_4$ | $r_5$ | $r_6$ | $r_7$ | |
| -1 | 1 | | | | $r_0$ | $r_1$ | $r_2$ | $r_3$ | $r_4$ | $r_5$ | $r_6$ | $r_7$ | | |
| 0 | 2 | | | $r_0$ | $r_1$ | $r_2$ | $r_3$ | $r_4$ | $r_5$ | $r_6$ | $r_7$ | | | |
| 1 | 3 | | $r_0$ | $r_1$ | $r_2$ | $r_3$ | $r_4$ | $r_5$ | $r_6$ | $r_7$ | | | | |
| 2 | 4 | $r_0$ | $r_1$ | $r_2$ | $r_3$ | $r_4$ | $r_5$ | $r_6$ | $r_7$ | | | | | |

EP 0 825 778 A2

## Description

The present invention relates to data compression and, more particularly, to the compression of digital video images.

The advent of digital representations of visual information made possible the machine manipulation of visual information. Visual communications is now a rapidly growing field spanning the telecommunications, computer, and media industries. The progress in this field is supported by the widespread availability and expanding capacities of digital transmission channels and digital storage media. Communication-based applications include ISDN videophone, videoconferencing systems, video mail, digital broadcast television, high-definition television (HDTV), and program delivery on cable and satellite. Storage-based audiovisual applications include digital laserdiscs, electronic cameras, training, education, and entertainment. Interactive multimedia applications on personal computers, workstations, and the ubiquitous world wide web are here to stay.

Low cost is desirable for the successful introduction of new communication services. Unlike the digital audio technology of the 1980's, however, many of the applications of digital video hinge on the use of data compression to reduce transmission and storage requirements. Many techniques have evolved for representing (coding) visual information by a finite sequence of integers suitable for digital processing. Corresponding to each coding procedure is a method of decoding or reconstructing the desired visual information from the coded data.

The performance of the coder-decoder is a measure of how well the reconstructed visual information achieves the goals of the system. Designers of image/video processing systems explore not only new coding techniques, but also new methods of subjective and objective evaluation. Another aspect of system performance is its efficiency. The aim of most coding methods is to produce as little digital data as possible while at the same time accomplishing the given overall goals of the system.

To facilitate industry growth and world wide interchange of digitally encoded audiovisual data, there is a demand for international standards for the coding methods and transmission formats. International standardization committees have completed three digital standards. The Joint Photographic Expert Group (JPEG) of the International Standards Organization (ISO) has specified a standard for still picture compression. The ITU (formerly the Consultative Committee on International Telephony and Telegraphy, or CCITT) proposed Recommendation H.261 for video telephony and videoconferencing (CCITT Study Group XV, 1990). The Moving Pictures Expert Group (MPEG) of ISO has completed MPEG-1 (MPEG-1, 1991) for compression of full-motion video on digital storage media. Further, it has completed MPEG-2 (MPEG-2), a family of standards with different profiles and levels that will provide broadcast-quality TV over 2 to 15 Mbits/sec channels.

Successive image frames in a video sequence can differ because of object motion, camera motion, panning, zooming, *etc.* Estimating the relative motion between image frames addresses the registration problem, which involves the spatial alignment of a pair of views of a scene. This problem has long been of interest in such areas as video compression, robot vision, biomedical engineering, target detection from radar images, and remote sensing from satellite images. Motion estimation (ME) is the process of determining the movement of objects within a sequence of image frames. Motion-compensated (MC) image processing is the processing of images to account for the presence of motion.

Among the various applications for motion-compensated image processing are image interpolation, image restoration, and video coding. Accurate motion models allow for a compact description of moving imagery, and motion prediction permits high compression. Thus, it is desirable to find efficient, accurate techniques for motion estimation that are compatible with an MPEG-compliant video encoder.

Exhaustive search for the minimum mean-square error (MSE) is a common blockmatching method for obtaining the optimal motion estimate over a given search area. Since exhaustive sequential search may be computationally unfeasible, many "fast" methods for 'improving' video compression performance are advocated. Among these are simplified matching criteria, faster search strategies, and more flexible segmented-block motion fields. Generally, the methods known in the art provide either a statistical speedup when performing exhaustive sequential search, or deploy a sparse search strategy that reduces computation at the expense of accuracy.

## Image Coding

Compression of visual data is possible because of redundant and/or irrelevant information in the video signal. Any information that can be extracted using the statistical dependence between the pixels is redundant and can be removed. Any information below a specific quality threshold is not relevant to the receiver and need not be transmitted. In the case of a human observer, the visual properties of the human eye distinguish the relevant from the irrelevant.

Image and video compression techniques exploit correlation in space for individual still image frames and in both space and time for successive video frames. Redundancy in the data that may exist due to the predictable nature of images can be removed by applying a linear transformation to create decorrelated outputs from a correlated input

2

stream. In addition, vector quantization can be employed to achieve further packing gain (even on independent variables), remove nonlinear as well as linear dependencies, and allow coding at fractional bit rates.

Lossy methods, in which the reconstructed data are not identical to the original, generally exploit nonlinear aspects of the human visual system. Irrelevant information can be eliminated if the data can be transformed into another domain where the image information can be rearranged according to its subjective order of importance. The less important information is simply discarded by coarser quantization. In other words, a transform matched to human perception will enable the lossy quantizer to preferentially dispose of irrelevant information. The energy-packing property of unitary transforms such as the discrete-time Karhunen-Loève transform and the discrete cosine transform is useful for this subjective ordering of the information content of visual signals.

Although the primary objective in most digital image compression systems is a high fidelity reconstruction of the original signal with as few bits as possible, additional system requirements may also be imposed. For instance, if the application demands multi-resolution scalability, then linear transforms with the successive refinement property, such as wavelets and pyramid coding, are more suitable for achieving the overall goals of the system.

Coding a single frame of a video sequence exploits only the spatial correlation in the image and is called intraframe coding. Time-varying images can be transmitted more efficiently by exploiting the similarities between successive frames of a video signal. The use of temporal correlation to code a sequence of video frames is called interframe coding. Interframe coding requires storage of the frames used in the coding process. Three-dimensional transform coding over $N$ frames in the temporal dimension involves an inherent delay, since $N$ - 1 previous frames are needed simultaneously in coding the current frame. Excessive delay and prohibitive storage requirements may limit to two or three the number of frames that can be effectively used.

When restricted to using such a small number of frames, the advantage of transform coding along the temporal dimension over waveform coding in terms of correlation reduction and energy compaction diminishes significantly. In this case, a hybrid transform/waveform coding approach is generally better. In the simplest form of hybrid coding, a two-dimensional transform is computed for each frame, and then waveform coding such as differential pulse code modulation (DPCM) is applied along the temporal dimension.

Conditional replenishment is a simple extension of DPCM that codes the difference between the current frame and the previously coded frame, but transmits this difference (which is also called the residual error or residue) only if it exceeds some threshold. The idea behind this extension is that the residue is typically very small except in the regions of the image where there is motion. At the receiver, a pixel is reconstructed by either repeating the value of the corresponding pixel location from the previous frame when the residue is below the threshold or by replenishing the previous pixel location with the decoded difference signal when the residue is above the threshold. A buffer with an appropriate buffer-control strategy is needed to smooth out the higher than average data rates in frames with large motion and the lower than average data rates in frames with little motion.

Another possible approach for reducing the video bit rate is to simply discard some frames and then reconstruct them from the coded frames at the decoder using temporal interpolation. Unlike methods for image reconstruction, however, any method for image coding must also address the additional fundamental constraints of bit transfer rate, image quality, and computational complexity. For instance, discarding every other frame will not necessarily result in a bit rate reduction by a factor of two, since discarding a frame is likely to reduce the correlation between the two consecutive frames that are coded, causing the error signal to be higher in magnitude. That is, for the same threshold, more pixels will have to be replenished.

To overcome such limitations, motion estimation and motion compensation may be applied to video compression and predictive coding. Rather than applying temporal interpolation to improve the performance of conditional replenishment, better results are obtained by using motion-compensated prediction to predict and code the current frame based on the previously coded frame. The residual error, which is then called the displaced frame difference (DFD), is the difference between the current pixel and a displaced pixel in the previous frame. If the displacement estimate is accurate enough, then the error obtained after motion compensation will have a decreased magnitude and, as a result, fewer pixels will need to be updated at a given threshold than would be required with conditional replenishment. The quality of motion-compensated prediction depends greatly on the accuracy and robustness of the motion estimator. The estimated displacement offset or motion vector is not limited to integer values but can be interpolated to sub-pixel accuracy.

## MPEG

A color TV picture requires a data transmission rate of 166 Mbits/sec. A typical color photograph requires about 3 Mbytes of storage. Compression is required to achieve these data rates and manage the storage requirements. Lossless compression techniques, however, can achieve at most a compression of 3 to 1. Methods that achieve high compression rates (such as 10:1 to 50:1 for images and 50:1 to 200:1 for video) require lossy techniques.

One lossy compression standard called MPEG is a representation/display standard designed to compress video sequences by up to 50:1. MPEG-1 was designed to compress non-interlaced SIF (standard interchange format) video at a data rate of 3.8 Mbytes/second to 1.5 Mbits/second or less for VHS-quality reproduction. MPEG-2 was designed to transmit broadcast quality interlaced TV video over 2 to 15 Mbits/second channels. MPEG is tailored to asymmetric applications such as electronic publishing, digital libraries, games, and program delivery that require frequent use of the decompression process and an inexpensive decoder for consumers.

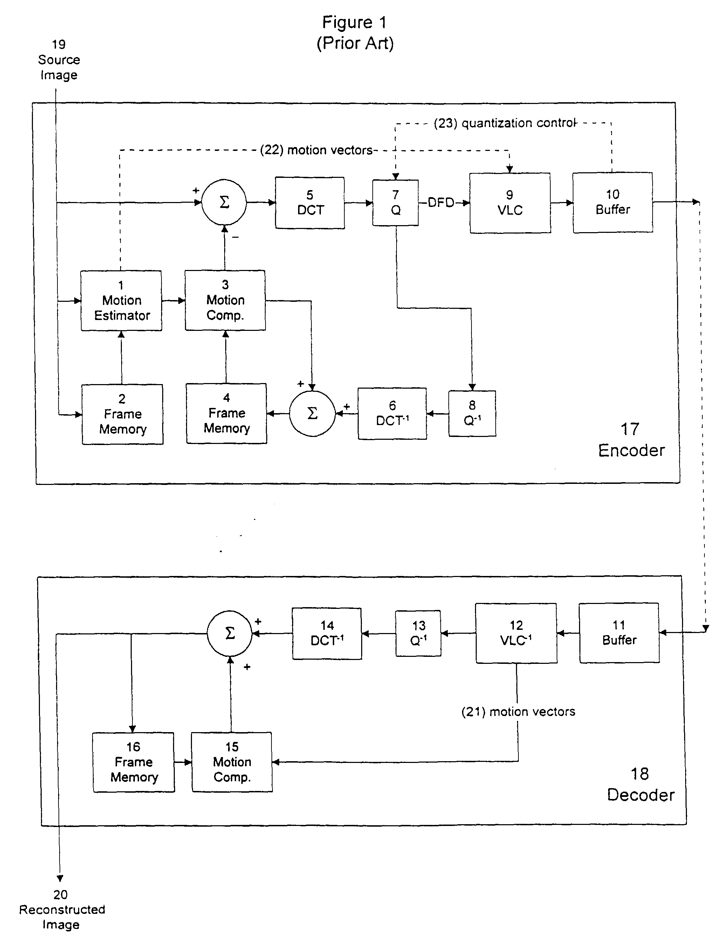

The MPEG standard specifies the coded representation of picture information for digital storage media and digital video communication and specifies the decoding process. The MPEG encoder is said to be hybrid because it combines transform coding with predictive interframe coding, in which a block in the current frame is predicted from a block in the previous frame using a feedback loop. In order to have the same prediction at both the receiver and the transmitter, the decoder must always be incorporated into the encoder. In contrast, the JPEG standard for still pictures operates in an open loop that is reset at the end of each image. A block diagram of a video encoder and decoder with MC (motion-compensated) prediction, DCT (discrete cosine transform) coding of the prediction error, variable length coding, and quantization control by the buffer content is shown in Figure 1, which specifies the basic structure of the H. 261 MPEG-1 and MPEG-2 encoder/decoder. The DCT coefficients are quantized until enough can be discarded to satisfy the bit rate requirements, and then lossless entropy coding is applied to the small number of remaining transform coefficients. Aside from the subsampling of the chroma components and rounding errors in the 2-D transform, quantization is the only lossy part of the compression scheme.

MPEG uses motion-compensated predictive DCT coding on some frames, and bi-directional motion-compensated interpolation on the remaining frames. The video sequence is segmented into blocks of frames, which are each called a group of pictures (GOP). The first frame in a GOP is called the intraframe coded image or I-frame and is coded using no prediction. The I-frame is used as the initial frame of a motion compensation loop that predicts every Nth frame in the GOP, where N is typically 2 or 3. The predicted frames are called P-frames. The $N$-1 skipped frames are interpolated along the motion trajectories using the nearest P-frames and/or I-frame as the reference (or anchor) frames. These skipped frames are called B-frames because the interpolation is bi-directional (noncausal). Both the I-frame pixels and the various prediction errors (the displaced frame differences for each P-frame and B-frame) are compressed using a JPEG-like standard involving the DCT, quantization, and entropy coding.

Intraframe coding techniques can provide 6:1 data reduction. The I-frame to I-frame distance (i.e., the number of frames in the GOP) is about 12 to 15, which provides a random access point every half second of video for fast-forward/fast-reverse capability. Motion compensation can improve the compression ratios by an additional factor of 10. P-frames, coded with MC prediction from a single reference frame, provide 10:1 to 20:1 compression, and B-frames, coded using bi-directional MC interpolation from both past and future reference frames, can achieve 120:1 compression.

Increasing the number of B-frames between successive reference frames generally decreases the correlation between the B-frames and the reference frames as well as the correlation between the references themselves so that the quality of the resulting interpolation decreases. B-frames, however, still contribute significantly to the overall video quality due in part to their ability to predict areas that are uncovered by moving objects. In addition, B-frames also help to limit the propagation of transmission errors since they are not themselves used for the prediction of subsequent frames. On the other hand, B-frames increase delay and picture buffer size.

The MPEG standard specifies only the coded representation (the coded bitstream syntax) of video data and the decoding process required to reconstruct the image sequence. In other words, a decoder is an MPEG decoder if it decodes an MPEG bitstream to a result that is within acceptable bounds as specified by the decoding process. Although it does not define the encoding process, the standard does define the form and content of the data that the encoder is allowed to transmit. Thus, an encoder is an MPEG encoder if it can produce a legal MPEG bitstream.

The designation "MPEG compatible" is not qualitative. Two decoders with different implementations may be theoretically equivalent in the sense that they produce the same output (as defined by the decoding process of the MPEG standard) when presented with the same input. On the other hand, two encoders with different implementations could produce different (yet legal) outputs when presented with the same source material. One of the two, however, may have a better fidelity in the decoded sequence or a lower cost of implementation. Integrated circuit manufacturers can distinguish their encoders through the consistency of their bit rate control, the adaptability of their quantization levels, the effectiveness of their preprocessing to minimize coding artifacts, and the accuracy and speed of their motion estimation method. For example, while the encoder has the responsibility to estimate motion vectors, the MPEG standard does not dictate how that estimation is to be accomplished.

Motion estimation is performed on the luminance component of a given macroblock (16 by 16 block of pixels, as specified by the MPEG standard) and the resulting motion vector is applied to the chroma channels as well. Within the framework of the MPEG standard, the motion estimation problem is to select a motion vector for the current macroblock that minimizes some cost function of the prediction error between the current block and each predictor candidate. Such details as the cost function, the search range, and whether the original or the reconstructed frame is used as the reference are left to the implementor.

## Schemes for Motion Estimation

Any approach to motion compensation (MC) begins by estimating a motion field at the encoder based on pixel intensities in the current and previous frames. A basic problem of MC is that this motion field estimate must be reconstructed at the decoder without the benefit of the pixel intensities in the current frame. This problem generally leads to a trade-off between decoder complexity and bit transfer rate.

The various schemes of MC are characterized by how information about this motion field is obtained at the decoder. Two standard approaches are recursive backward MC and region-based forward MC. Recursive backward methods predict the motion field at the current frame based on previously decoded frames and hence do not require motion vectors to be transmitted by the encoder. For region-based forward methods, the encoder transmits motion vectors to the decoder. To decrease the computational burden placed on the decoder, the MPEG standard uses forward MC.

The goal of motion estimation then is to find displacement offsets for the pixel intensities of the current frame based upon those in some previous frame. By a previous frame, we mean a previously decoded frame. In particular, it is possible that the previous frame may be positioned after the current frame in display order. For this reason, we will hereafter refer to the previous frame as the reference frame. The predicted frame is the approximation to the current frame obtained by applying motion compensation to the reference frame or frames, before correcting for any DFD (displaced frame difference) residual. In the case of MPEG, P-frames can be predicted from past I-frames or past P-frames, and B-frames are interpolated from a past and a future I-frame and/or P-frame. B-frames are never used as reference frames.

## Blockmatching Motion Estimation

Region based methods of motion estimation consider a small region in the current frame to be predicted and search for a displacement that produces a "best match" among the candidate regions in the reference frame. In particular, the motion vector $\mathbf{d} = (d_x, d_y)$ is chosen so that the prediction error PE($\mathbf{d}$), which is given by

$$\mathrm{PE}(\mathbf{d}) = \sum_{(x,y) \in V} D(f_t(x,y), f_R(x - d_x, y - d_y)),$$

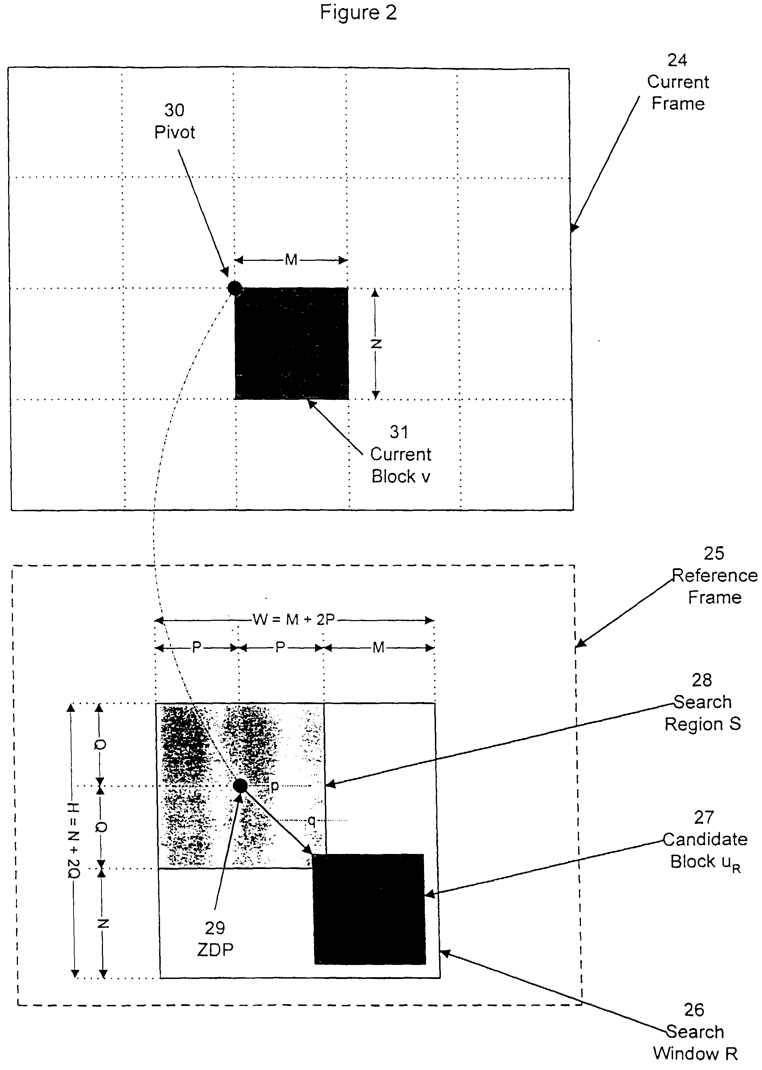

is minimized, where (referring now to Figure 2) $f_t(x,y)$ denotes the luminance component of a pixel at location $(x,y)$ in the current frame 24, $f_R(x,y)$ denotes the luminance component of a pixel at location $(x,y)$ in the reference frame 25, $V$ denotes the set of pixel locations in the current block 31, and $D$ is a mismatch function that quantifies the dissimilarity between a pixel in the current block 31 and in each candidate block 27. The pivot 30 of the current block 31 is the top left pixel position of the block. The zero-displacement pivot (ZDP) 29 is the pivot in the reference frame 25 that has the same pixel coordinates as the pivot 30 of the current block 31 in the current frame 24. A blockmatching motion estimation (BMME) scheme finds the "best" motion vector by evaluating PE($\mathbf{d}$) for each displacement vector $\mathbf{d}$ such that $(x_0, y_0) + \mathbf{d}$ is inside S, where S is the search region 28 and $(x_0, y_0)$ is the zero displacement pivot 29. Note that the search window 26 contains each possible candidate block 27 whereas the search region 28 contains only the pivot of each possible candidate block 27. Any $M \times N$ block of pixels in the reference frame 25 whose pivot lies within the search region 28 around the ZDP 29 is a potential candidate block 27.

Among the many possible choices for the mismatch function $D$, the mean absolute error (MAE) is the overwhelming favorite due to its relative ease of hardware implementation, even though it suffers from poor performance. More accurate criteria such as the cross-correlation function and the mean square error (MSE) are often dismissed in the literature as too complex for real-time hardware implementation.

The classical technique for registering (i. e., aligning) a pair of images that differ by unknown translational motion is to maximize the peak of the cross correlation between the pair of images. When applied to the problem of motion estimation, the maximum cross-correlation (MCC) criterion seeks a displacement $\mathbf{d} = (d_x, d_y)$ that maximizes the cross-correlation function given by

$$\mathrm{CCF}(\mathbf{d}) = \sum_{(x,y) \in V} f_t(x,y) f_R(x + d_x, y + d_y),$$

where (again referring to Figure 2) $f_t(x,y)$ denotes the luminance component of a pixel at location $(x,y)$ in the current frame 24, $f_R(x,y)$ denotes the luminance component of a pixel at location $(x,y)$ in the reference frame 25, $V$ denotes the set of pixel locations in the current block 31, and the variable $\mathbf{d}$ must be such that $(x_0, y_0) + \mathbf{d}$ is inside S, where S is the search region 28 and $(x_0, y_0)$ is the zero displacement pivot 29.

The magnitude of the cross correlation is not always an adequate measure for template matching. The cross correlation can be large even for a mismatch if the image amplitude of a particular candidate block is high. In other words, the candidate block selected is sensitive to intensity scale changes. To avoid this difficulty and make the choice independent of relative intensity, one could instead choose a displacement $\mathbf{d} = (d_x, d_y)$ that yields the maximum of the normalized cross-correlation (MNCC) function given by

$$\text{MNCC}(\mathbf{d}) = \frac{\sum_{(x,y) \in V} f_t(x,y) f_R(x + d_x, y + d_y),}{\sqrt{\sum_{(x,y) \in V} f_t^2(x,y)} \sqrt{\sum_{(x,y) \in V} f_R^2(x + d_x, y + d_y)}}.$$

Note that since the norm of $f_t$ in the denominator is not a function of $\mathbf{d}$, maximizing the normalized cross-correlation function is equivalent to maximizing

$$\frac{\sum_{(x,y) \in V} f_t(x,y) f_R(x + d_x, y + d_y),}{\sqrt{\sum_{(x,y) \in V} f_R^2(x + d_x, y + d_y)}}.$$

The peak-to-peak signal-to-noise ratio (PSNR) is a generally accepted measure of image fidelity so another possible approach is to maximize (by choice of $\mathbf{d}$) the PSNR given by

$$\text{PSNR}(\mathbf{d}) = 20 \log \left( \frac{255}{\sqrt{\text{MSE}(\mathbf{d})}} \right),$$

where 255 is the signal intensity range for 8-bit pixel values and MSE($\mathbf{d}$) is the mean square error given by

$$\text{MSE}(\mathbf{d}) = \frac{1}{MN} \sum_{(x,y) \in V} (f_t(x,y) - f_R(x + d_x, y + d_y))^2.$$

Note that choosing $\mathbf{d}$ to maximize the PSNR is equivalent to choosing $\mathbf{d}$ to minimize the MSE. We will refer to such a method as a minimum sum of square differences (MSSD) technique.

Notice that in terms of maximizing the PSNR, no technique for blockmatching motion estimation can outperform an MSSD technique. The primary justification for sacrificing performance is to reduce computational complexity. The mean absolute error (MAE) mismatch function is very popular due to its lower computational complexity when compared with the MCC and MSE techniques, both of which require multiplication. In particular, a MAE motion estimate is a displacement vector $\mathbf{d}$ that minimizes the MAE given by

$$\text{MAE}(\mathbf{d}) = \frac{1}{MN} \sum_{(x,y) \in V} |f_t(x,y) - f_R(x + d_x, y + d_y)|.$$

We will refer to such a method as a minimum sum of absolute differences (MSAD) technique.

Since the possibility of computing the MSE is generally dismissed by most practitioners due to its complexity, the MAE has replaced the MSE as the baseline for reporting performance comparisons in the literature. That is, the performance in terms of the PSNR of newer techniques is usually compared to full-search MAE, usually with favorable results. It is possible to outperform full-search MAE on certain video sequences, but without a comparison to full-search MSE, it is difficult to determine how much performance in terms of the PSNR is being sacrificed.

An approach that considers the behavior of individual pixels in the search to find a best match is called a minimum pixel difference classification (MPDC) method. In such a method, each pixel is classified as either a matching pixel or a mismatching pixel by comparing the MAE to a threshold. Two pixels are said to match if their MAE is below the predetermined threshold. The best match within the search region is the block with the largest number of matching pixels. This method has been shown to outperform the MSAD method while reducing the computational complexity. In fact, using the PSNR of the motion compensated frame as the performance measure, the MPDC method has been shown to have a performance close to that of the MSSD method and significantly better than that of the MSAD method. As the search region is made larger, the gap in performance between MSAD and MPDC becomes wider. Further, when tested on a faster moving sequence, the PSNR for MSSD and MPDC continues to improve yet declines for MSAD. Ideally, a larger search region should *increase* the ability of a motion compensated predictor to track a quickly moving object with correspondingly larger displacements. This conflicting behavior is a clear indication of the suboptimality of the popular MSAD method. This popularity, however, persists due to the MSAD method's relative ease of implementation despite the problems of the method, particularly when faced with quickly moving objects.

**Search Schemes and Computational Complexity**

A full-search blockmatching algorithm (FSBMA) evaluates the prediction error for each pivot within a given search range and selects a pivot with the smallest error. Efficient sequential search strategies can provide a significant statistical increase in speed over the FSBMA approach. Sparse-search blockmatching algorithms (SSBMA) use some form of motion field subsampling, in which certain blocks within the search window are not considered to be candidates. Other methods use some form of pixel field subsampling to reduce the number of computations involved in evaluating the mismatch function.

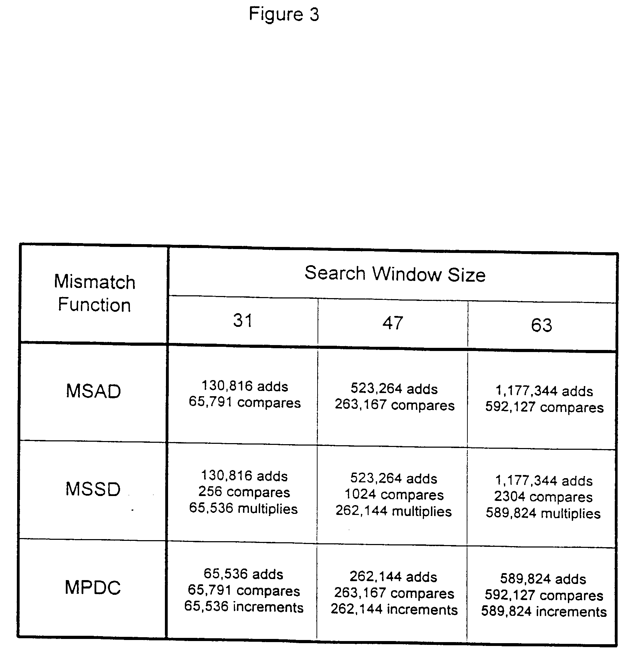

For the FSBMA depicted by Figure 2, the total number of searches *(i.e.,* evaluations of the prediction error) required for an exhaustive full-search over the $W \times H$-sized window 26 of pixels in the reference frame 25 is given by $(W - M + 1)(H - N + 1)$, which equals $(2P + 1)(2Q + 1)$. Figure 3 summarizes the number of arithmetic operations per $16 \times 16$ pixel macroblock required by three different FSBMA methods. (Differences in word lengths are not accounted for, and no statistical speedup is assumed.)

With FSBMA techniques, no decision can be made until the mismatch function has been computed for all possible search candidates. Thus, the amount of computation is the same for all degrees of misregistration *(i.e.,* translation distance). This deficiency can be remedied by an efficient sequential search in which the evaluation of the mismatch function at a particular candidate displacement is terminated whenever the accumulated prediction error exceeds the best-so-far minimum, at which point the search continues with the next candidate displacement.

The motion vector search in MPEG-1 takes over 90% of the total processing time for the standard pattern in which I-frames and P-frames are separated by two B-frames. The early termination approach described above results in a 50% speedup. Note, however, that this is a statistical speedup. That is, the sooner a good estimate is found with its correspondingly low cost, the less computation is required to discard the remaining poor estimates.

The statistical speedup that can be obtained by sequential search methods is largely dependent upon the success of the initial motion estimate. Naturally, the better that one can initially estimate the true displacement, the faster the search can be terminated. For example, since smaller motion vectors are more common, a spiral search centered around the zero displacement point yields a 30% speedup over a rectangular (raster-scan order) search. Further, an additional 10% improvement can be achieved by first trying the motion vector from the previous macroblock before starting the spiral search. This is particularly true when the motion is caused by a camera panning a scene.

The BMME methods considered above have each used an exhaustive search of all pivots within the search region. Efficient sequential search schemes such as early termination and spiral search provide a statistical speedup that may reduce the computational requirements to a manageable level when averaged over a long video sequence. Still, for any given macroblock, there is no guarantee that the best motion vector will be located in less time than it takes for an exhaustive search. This situation makes it difficult to ensure sufficient speedup for real-time, worst case operation.

Sparse search blockmatching algorithms (SSBMA) attempt to provide a nearly fixed speedup in computation by considering only a subset of possible offsets within the search region. Each of these methods is based on an assumption that the mismatch function (typically MAE) increases monotonically as the candidate offset moves away from the direction of minimum distortion. Since the MAE surface generally has several local minima in which the search can become trapped, the solution obtained by a SSBMA may be only a local optimum. Thus, SSBMA methods reduce the computational burden at the expense of accuracy. Further, the methods used to prune the search space are heuristic and thus may naturally be expected to experience difficulties in certain cases.

SUMMARY OF THE INVENTION

The present invention utilizes a blockmatching motion estimation method using mean-square error (MSE) as the matching criterion. Making use of fast methods for multidimensional convolutions, a new method for computing motion estimates with the MSE criterion has been developed that overcomes that method's daunting computational complexity. Thus, improved motion estimation in a worst-case run time may be obtained that is comparable to the average run time of statistical speedup methods and to the run time achieved by sparse search methods that sacrifice estimation accuracy.

More particularly, in one embodiment of the invention a method of obtaining motion estimation vectors for a block based video compression scheme is disclosed. The method may include partitioning the current frame and a reference frame into blocks and selecting a current block from the current frame. Further, the method may include calculating and storing in a table a truncated convolution of the current block and the reference frame and selecting for the current block a set of reference blocks from the reference frame. Then, a reference block, may be searched for from the set of reference blocks such that the desired reference block is identified as having a mean square error with the current block that is no larger than a mean square error between the current block and any other reference block of the set of reference blocks. The set of reference blocks may include each block that is within the reference frame.

The method may further include locating from the table, for a plurality of reference blocks, the inner product of the reference blocks and the current block. Also, for each reference block of the plurality of reference blocks the squared norm of the reference block may be calculated. The sum of the squared norm and the negative of twice the inner product may also be calculated. Then, a reference block from the plurality of reference blocks may be selected which has a sum that is no larger than the sum obtained for any other reference block of the plurality of reference blocks. The squared norm may be calculated by computing a running sum of squares within the reference frame. Further, the running sum of squares may be obtained by dividing the reference frame into overlapping rows of pixels; summing the squared norms of the pixels in each column of the rows using, for each row beyond the first, the sums from the previous row to aid in the computation; and summing the sums of the columns in each row to find the sum of squares of each reference block in the reference frame using, for each reference block beyond the first, the sums from previous reference blocks to aid in the computation. Finally, the method may also include utilizing a fast numerical method to compute the convolution of the current block and the reference frame, discarding terms in the convolution for which the current block and the reference frame do not completely overlap, and arranging the remaining terms from the convolution in tabular form.

In another embodiment of the present invention a method of obtaining motion vectors in a MPEG encoder is provided. The methods includes selecting a P-frame or I-frame from a group of pictures to be the reference frame and selecting a B-frame or P-frame from the group of pictures to be the current frame. Then, the current frame and the reference frame may be partitioned into blocks and a current block from the current frame selected. Then, a truncated convolution of the current block in the reference frame may be calculated and stored in a table. The method further includes selecting for the current block a set of reference blocks from the reference frame and searching for a reference block from the set of reference blocks having a mean square error with the current block that is no larger than a mean square error between the current block and any other reference block of the set of blocks.

Another embodiment of the present invention includes a data compression method of finding a desired data block from a set of data blocks within a frame of image data that has a minimum mean square error with a predetermined fixed data block. The method includes calculating and storing in a table a truncated convolution of the fixed data block with the frame of image data and locating from the table the inner product of each data block of the set of data blocks and the fixed data block. Further, the method includes calculating for each data block of the set of data blocks the sum of the squared norm of each data block and the negative of twice the inner product. Finally, the method includes selecting the desired data block from the set of data blocks for which the sum is no larger than the sum obtained for any other data block from the set.

In yet another embodiment of the present invention, a method for compressing moving image data using motion estimation vectors is provided. This method includes providing a reference image frame which may be divided into a plurality of candidate sub-images. As used herein, a sub-image may be the entire image or some lessor portion of the image. Further, the method includes providing a current image frame which is divided into a plurality of current frame sub-images. The method also includes selecting a reference frame sub-image that corresponds to one of the current frame sub-images by identifying at least one candidate sub-image that provides a minimum mean square error between at least one of the candidate sub-images and at least one of the current frame sub-images. The mean square error may be determined by performing a calculation comprising a running sum of squares and a convolution. The convolution may be a truncated convolution of the current block and the reference frame. Furthermore, the minimum mean square error may be calculated over a predetermined search region.

BRIEF DESCRIPTION OF THE DRAWINGS

Figure 1 is a block diagram of a typical MPEG encoder/decoder.
Figure 2 shows the geometry of a block matching search scheme.

Figure 3 presents a table comparing the computational complexity of three different FSBMA methods.

Figure 4 shows, for the one-dimensional case, how the candidate blocks are formed by sliding the search window past the current block.

Figure 5 shows the truncated convolution sum alignments for the one-dimensional case.

Figure 6 shows the computational complexity of two-dimensional convolution per macroblock for seven different methods of two-dimensional convolution.

## DETAILED DESCRIPTION OF THE INVENTION

The present invention utilizes a blockmatching motion estimation method using mean-square error (MSE) as the matching criterion. Making use of fast methods for multidimensional convolutions, a new method for computing motion estimates with the MSE criterion has been developed that overcomes that method's daunting computational complexity. Thus, improved motion estimation in a worst-case run time may be obtained that is comparable to the average run time of statistical speedup methods and to the run time achieved by sparse search methods that sacrifice estimation accuracy.

The method of the present invention may be used with the MPEG video compression standard. An overview an apparatus for use with this standard, which is more fully described in the prior art, is given in Figure 1. The source image 19 enters the motion estimator 1 and the frame memory 2 of an encoder 17. The motion estimator 1 produces motion vectors based on the source image 19 and a previous image stored in frame memory 2 (prior to its replacement by source image 19). These motion vectors are sent to the motion compensator 3 and the variable length coder (VLC) 9. The prediction error between the source image 19 and the output of the motion compensator 3 is subjected to a discrete cosine transform (DCT) encoder 5. The resulting coefficients are sent to a quantizer 7 and the resulting quantized and encoded displaced frame difference (DFD) is sent to the variable length coder 9 (the output of this quantizer is also used to form the reconstructed image that in turn is used to calculate the prediction error). The output from the VLC 9 is sent through a buffer 10 to the decoder 18. The decoder 18 includes a buffer 11 and decoder blocks 12, 13, and 14. The input to the decoder 18 is decoded to reconstruct the motion vectors 21 and the reconstructed image 20, which is stored in frame memory 16 and used by the motion compensator 15 to form the next reconstructed image.

Although the present invention is not restricted to the two-dimensional case, its use with the MPEG compression standard would generally occur in a two-dimensional setting. Before considering the two-dimensional case, however, its use in a one-dimensional setting will be described. Based upon this discussion it will become clear how the method may be applied to higher dimensions.

### The One-Dimensional Case

Consider a one-dimensional MSSD problem in which one seeks a vector u from a set of candidate vectors within a reference vector in such a way that the mean square error between u and some current vector v is minimized. In the reference vector, define a search window of length $W = M + 2P$ centered about the zero displacement pivot (ZDP), where $M$ is the length of vectors $\mathbf{u}$ and $\mathbf{v}$ and $P$ is the maximum trial offset (in either direction) from the ZDP for a candidate vector considered in the search.

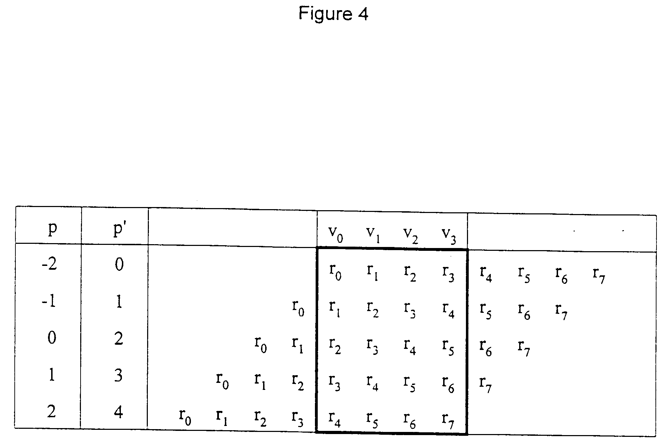

Consider the blockmatching process applied to some vector v and a set of candidate vectors obtained by sliding a window of length $M$ over a search window of length $W$. Figure 4 depicts the situation when $M = 4$ and $P = 2$, where the pixels (denoted by $v_i$) of the vector $\mathbf{v}$ are shown at a fixed location in the first row while the remaining rows depict the pixels (denoted by $r_i$) of the search window shifted left or right corresponding to the value of $p$ in the left column. On any given row, the portion of the search window falling within the sliding window (i. e., the displaced pixels of the search window that overlap the extant (or support) of $\mathbf{v}$) represents the candidate vector $\mathbf{u}$ used for the MC prediction of $\mathbf{v}$ given that particular offset from the ZDP.

A candidate vector is given by any $M$ consecutive values within the search window $R = \{r_i : i = 0, 1, ..., W - 1\}$. That is, a candidate vector $\mathbf{u}_P$ has the form

$$u_P = \{r_{i+p+P} : i = 0, 1, ... , M - 1\},$$

where the trial offset value $p$ is an integer such that $-P \le p \le P$. For example, an offset value of $p = 0$ corresponds to the candidate whose pivot is equal to the ZDP. In this case, the sliding window is centered within the search window, and the candidate under consideration is $\mathbf{u}_{p=0} = [r_2, r_3, r_4, r_5]$ (see Figure 4, middle row).

The blockmatching process consists of computing the cost, such as the sum of squared differences (SSD), corresponding to each of the $2P + 1$ candidate blocks, and then choosing a candidate with the smallest cost. To simplify notation, we will (as indicated by Figure 4) re-index the search window so that its ZDP coincides with the leftmost pixel of $R$. In that case, all trial offsets $p'$ are nonnegative integers in the range $0 \leq p' \leq 2P$. The true displacement $p$ relative to the pivot of $\mathbf{v}$ is then given by $p = p' - P$.

Let SSD($p'$) denote the sum of squared differences between the desired vector $\mathbf{v}$ and a candidate vector $\mathbf{u}_{p'}$ at the (re-indexed) offset $p'$ where $p' = 0, 1, ..., 2P$. Note that

$$\mathrm{SSD}(p') = \sum_{i=0}^{3}(v_i - r_{i+p'})^2 = \sum_{i=0}^{3}v_i^2 + \sum_{i=p'}^{3+p'}r_i^2 - 2\sum_{i=0}^{3}v_i r_{i+p'}.$$

That is, SSD($p'$) is a sum of three terms. The first term, (the squared $l_2$ norm of the desired vector, which is denoted by $\|\mathbf{v}\|^2$) does *not* depend on the offset $p'$. The second term is the squared $l_2$ norm of the candidate vector $\mathbf{u}_{p'}$, which is denoted by $\|\mathbf{u}_{p'}\|^2$. The third term in the sum is the cross correlation function of the desired vector $v$ and the candidate vector $\mathbf{u}_{p'}$. This third term is very similar to a convolution sum, where we recall that the convolution of two sequences $x[n]$ and $h[n]$ is denoted by $\mathbf{x} * \mathbf{y}$ and is defined by

$$(\mathbf{x}*\mathbf{y})[n] = \sum_{k=-\infty}^{\infty}\mathbf{x}[k]\mathbf{h}[n-k].$$

Thus, the value of the third term in the previous expression for SSD($p'$) is given by one term in the convolution of $\{v_k: 0 \leq k < M\}$ and $\{R_{W-1-k} : 0 \leq k < W\}$. Note that, as in the convolution sum, we have reversed one of the sequences. In particular, let $R'_k$ denote $R_{W-1-k}$ for $0 \leq k \leq W$ and let $R' = \{R'_k : 0 \leq k \leq W\}$. Further, let $\mathbf{y}$ denote the convolution of $\mathbf{v}$ and $R'$. That is, for $0 \leq j < M$,

$$\mathbf{y}[j] = \sum_{k=0}^{M-1}v_k R'_{j-k}.$$

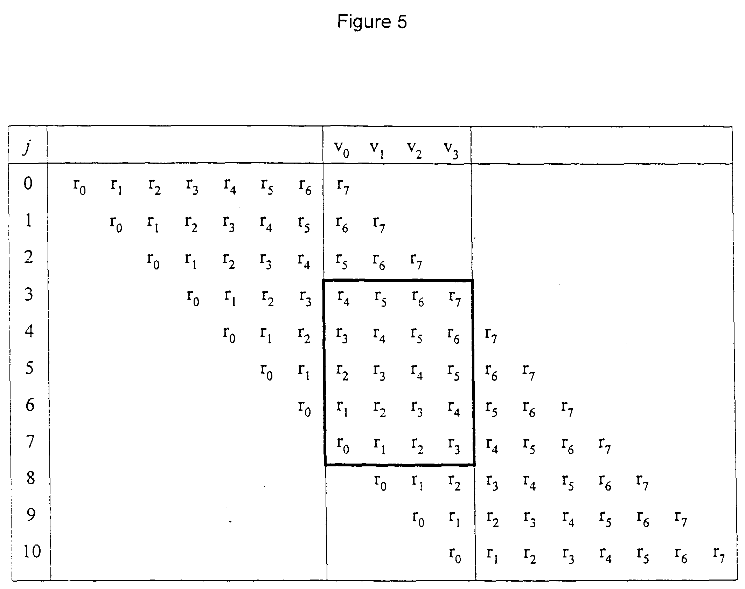

Consider the case when $M = 4$ and $P = 2$. The alignments of the sequences used to obtain the convolution $\mathbf{y}[j]$ for each particular value of $j$ are shown in Figure 5. Although the convolution yields an output sequence of length $W + M - 1$, we are interested only in the terms of $\mathbf{y}[j]$ such that $M-1 \leq j \leq W-1$. (That is, for a search window of size $M + 2P$, we are only interested in the terms that correspond to the $2P + 1$ possible candidate vectors.) For the example in Figure 5, only five of the eleven nonzero values in the convolution sum correspond to offsets of valid candidate vectors; namely, $\mathbf{y}[3], \mathbf{y}[4], ..., \mathbf{y}[7]$.

## The Two-Dimensional Case

The analysis of the one-dimensional situation can be extended to two dimensions in a straightforward manner. In particular, in two dimensions, the search window $R$ is a block of size $(M + 2P) \times (N + 2Q)$, where the desired block $v$ has size $M \times N$, and $P$ and $Q$ are the maximum offsets in each direction. (See Figure 2.) For the two-dimensional situation, we seek to minimize

$$\mathrm{SSD}(p,q) = \sum_{m=1}^{M}\sum_{n=1}^{N}(v(m,n) - u(m+p,n+q))^2,$$

by choice of the offset $(p,q)$, where $u$ denotes pixel intensities in the reference frame and $v$ denotes pixel intensities in the current frame. As before, the search is restricted to offsets that provide complete overlap between the current block and the translated reference block. A match is said to exist at offset $(p,q)$ if the value of SSD at $(p,q)$ is not larger than the value of SSD at any other candidate block in the search region. Again, we note that SSD is a sum of three terms. In particular,

$$\mathrm{SSD}(p,q) = \sum_{m=1}^{M}\sum_{n=1}^{N}|v(m,n)|^2 + \sum_{m=1}^{M}\sum_{n=1}^{N}|u(m+p,n+q)|^2 - 2\sum_{m=1}^{M}\sum_{n=1}^{N}v(m,n)u(m+p,n+q).$$

As before, note that the first term does *not* depend on the offset *(p,q)*. Also, note that the third term in the summation is the cross correlation function of the current block with the reference block evaluated at *(p,q)*. In the classical problem of template matching, the second term in the summation is assumed to vary rather slowly over the reference image and thus is regarded as a constant function of the offset. With that assumption, the matching problem is solved by maximizing the cross correlation function. That is, under this assumption we recover the MCC method considered earlier. In contrast, the MSSD criterion does *not* assume that this second term is constant. In particular, the MSSD criterion seeks an offset *(p,q)* that minimizes

$$\sum_{m=1}^{M}\sum_{n=1}^{N}|u(m+p,n+q)|^2 - 2\sum_{m=1}^{M}\sum_{n=1}^{N}v(m,n)u(m+p,n+q).$$

As with the one-dimensional case, computing a two-dimensional convolution of the current block with a reversed version of the search window will yield the term

$$\sum_{m=1}^{M}\sum_{n=1}^{N}v(m,n)u(m+p,n+q).$$

for all possible offsets *(p,q)* of interest.

**Fast MSSD Techniques**

As shown above, finding a MSSD match involves the computation of a sum of squares and a cross correlation for each possible offset. With regard to the sum of squares, it is important to note that although the current frame is partitioned into nonoverlapping macroblocks, their associated search windows in the reference frame do overlap. Thus, it is best to compute the sum of squares for all possible candidate blocks in the entire reference frame at once, rather than for each individual search window separately. We will first consider an efficient technique for computing this running sum of squares, and then consider methods for computing the cross correlation term.

Suppose that the size of an entire image frame is $K \times L$, the size of each macroblock is $M \times N$, and $f_R(m,n)$ is the intensity of the pixel with coordinate *(m,n)* in the reference frame. We begin by dividing the entire image into $(L - N + 1)$ overlapping row strips, with each strip containing $N$ rows of pixels. The following procedure yields the sum of squares of all blocks in the image:

*Step 1.* Compute the $l_2$ norm of each pixel in the image frame in $KL$ multiplications.

*Step 2.* For the first row strip, save the sum of each column as $C_{11}, C_{21}, \ldots, C_{K1}$. This step requires $K(N - 1)$ additions.

*Step 3.* For the second row strip, the sums $C_{12}, C_{22}, \ldots, C_{K2}$ may be found by noting that $C_{i2} = C_{i1} - |f_R(i,1)|^2 + |f_R(i,N+1)|^2$. This operation requires $2K$ additions. Find the column sums for the remaining row strips in a similar manner, for a total of $2K(L - N)$ additions for row strips 2 through $L - N + 1$.

*Step 4.* For the first block in the first row strip, the sum of squares is given by $SQ_{11} = C_{11} + C_{21} + \cdots + C_{M1}$ in $M - 1$ adds. The sum of squares for the second block in the row is $SQ_{21} = SQ_{11} - C_{11} + C_{(M+1)1}$, and similarly for $SQ_{31}, \ldots, SQ_{(K-M+1)1}$ until we obtain $SQ_{(K-M+1)1} = SQ_{(K-M)1} - C_{(K-M)1} + C_{K1}$. Each row strip requires $(M-1) + 2(K-M)$ additions. Thus, this step requires $(L - N + 1)((M - 1) + 2(K - M))$ additions.

Using this procedure, the total number of additions required in steps 2 through 4 to obtain the sum of squares for all blocks in the reference frame is

$$T = K(N\text{-}1)+2K(L\text{-}N)+(L\text{-}N+1)((M\text{-}1)+2(K\text{-}M))$$

$$= 4KL - K(3N\text{-}1)\text{-}L(M+1)+(N\text{-}1)(M+1).$$

This computation can be viewed as a search overhead for the current frame. The total number of macroblocks to be predicted in the entire image frame is $B = (K/M)\,(L/N)$. The overhead per macroblock $(T/B)$ is then $MN$ multiplications and

$$MN\left[4 - \frac{3N-1}{L} - \frac{M+1}{K} + \frac{(N-1)(M+1)}{KL}\right]$$

additions, or assuming square geometries with $K = L$ and $M = N$, the overhead per macroblock is $N^2$ multiplications and

$$N^2\left[4 - \frac{4N}{K} + \frac{N^2-1}{K^2}\right]$$

additions. Since $K$ and $L$ are typically much larger than $M$ and $N$, the overhead is roughly five operations per macroblock pixel. Considering that each block matching evaluation takes on the order of $2MN$ operations, the computation overhead for each macroblock is less than that required for direct evaluation of the cost function at three search locations.

The fast MSSD technique consists of computing the sum of squares overhead once per reference frame and a single two-dimensional truncated convolution for each macroblock. It is this truncated convolution term that we will consider next. To compute the truncated convolution we can employ fast linear convolution methods and discard the "tails" at the four edges of the output array, retaining only the terms from columns $M$-1 through $W$-1 and rows $N$-1 through $H$-1. We can also use fast cyclic convolution techniques and discard the first $M$-1 columns and $N$-1 rows (the "wrap-around" terms) of the output. Alternatively, provisions can be made in the implementation of the convolution method to ensure that only the necessary terms of the truncated convolution are computed, allowing even greater savings in computation over techniques for general convolution.

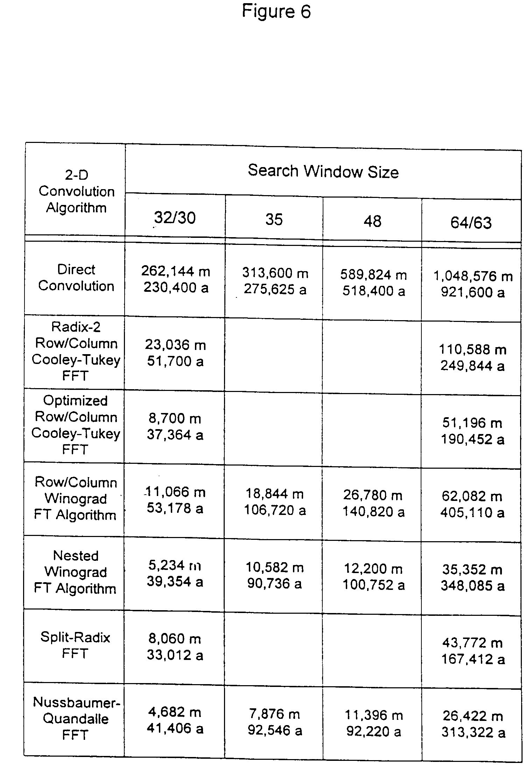

Figure 6 shows the computational complexity per 16 × 16 macroblock for seven two-dimensional convolution methods using several window sizes typical for MPEG motion estimation. The present invention may be utilized with any of a variety of convolution techniques. Numerous convolution techniques are known in the art. For example, *Fast Algorithms for Digital Signal Processing* by R. Blahut (Addison-Wesley, Reading, MA, 1985) and "'Split radix' FFT algorithm" by P. Duhamel and H. Hollmann *(Electronics Letters,* Vol. 20, No. 1, Jan. 1984, pp. 14-16) disclose various convolution techniques, the disclosures of which are incorporated herein by reference. We assume in Figure 6 that complex multiplications are computed using three real multiplications and three real additions. The total operation counts for frequency-domain methods are greater than those cited in most texts. This discrepancy occurs because published figures generally assume that one sequence is a fixed filter, and so its Fourier transform can be precomputed. Thus, only one forward transform (on the data sequence) is needed, followed by the pointwise products and one inverse transform. For our motion estimation problem, the "filter" is the current macroblock to be predicted, and so is fixed for only one convolution. Thus, the operation counts in Figure 6 reflect the complexity of computing three Fourier transforms (two forward and one inverse) along with the pointwise products. Also, although not considered in Figure 6, the additional overhead for the running sum of squares must be taken into account as well.

With the present invention, blockmatching using a mean square mismatch function becomes a viable and computationally attractive motion estimation technique. The computational complexity using the fast MSSD method for $N \times N$ macroblocks within a search window of size $W \times W$ is less than an order of $3\,W^2\log W$ multiplications and $9W^2\log W$ additions. For comparison, exhaustive sequential search using MSSD requires on the order of $N^2W^2$ multiplications and $2N^2W^2$ additions, while MSAD requires on the order of $3N^2W^2$ additions. Using the split-radix FFT, the present invention achieves a 78% reduction in the total number of operations as compared to full-search MSAD when $N = 16$ and $W = 32$, while also yielding the better quality of prediction than that provided by MAE. For $W = 64$, the total computation is reduced by 88%. Further, these reductions in computational complexity are fixed and independent of the data, unlike the statistical improvements offered by other methods, and the search for the best match is exhaustive, unlike other methods that reduce computation at the expense of accuracy by searching only a sparse subset of pixels and/or candidate offsets within the search space. The present invention will enable the implementation of MPEG video encoders with optimal real-time motion estimation capability.

Further modifications and alternative embodiments of this invention will be apparent to those skilled in the art in view of this description. Accordingly, this description is to be construed as illustrative only and is for the purpose of teaching those skilled in the art the manner of carrying out this invention. It is to be understood that forms of the invention herein shown and described are to be taken as illustrative embodiments. Various changes may be made in the type and arrangement of the methods, parts and components. Equivalent elements may be substituted for those illustrated and described herein, and certain features of the invention may be utilized independently of the use of other features, all as would be apparent to one skilled in the art after having the benefit of this description of this invention.

**Claims**

1.  A method of obtaining motion estimation vectors for a block-based video compression scheme comprising:

    partitioning a current frame and a reference frame into blocks;
    selecting a current block from said current frame;
    calculating a convolution of said current block and at least a portion of said reference frame;
    selecting for said current block a set of reference blocks from said portion of said reference frame; and
    searching for a reference block, from said set of reference blocks, having a mean square error with said current block that is no larger than a mean square error between said current block and any other reference block of said set of reference blocks.

2.  The method of claim 1, further comprising data from said calculating step being utilized in said searching step.

3.  The method of claim 2 in which said set of reference blocks includes each block within said reference frame.

4.  The method of claim 2 in which said data is stored in a tabular form.

5.  The method of claim 2, said searching step further comprising:

    obtaining from said convolution calculation, for a plurality of reference blocks from said set of reference blocks, the inner product of said reference blocks and said current block;
    calculating, for each reference block of said plurality of reference blocks, the squared norm of said reference block;
    calculating, for each reference block of said plurality of reference blocks, the sum of said squared norm and the negative of twice said inner product; and
    selecting a reference block from said plurality of reference blocks for which said sum is no larger than the sum obtained for any other reference block of said plurality of reference blocks.

6.  The method of claim 5 in which said plurality of reference blocks includes each reference block from said set of reference blocks.

7.  The method of claim 5, said calculating sum of squared norm step further comprising:
    computing a running sum of squares within said reference frame.

8.  The method of claim 7, said computing running sum of squares step comprising:

    dividing said reference frame into overlapping rows of pixels;
    summing the squared norms of the pixels in each column of said rows using, for each row beyond the first, the sums from the previous row to aid in the computation; and
    summing the sums of said columns in each row to find the sum of squares of each reference block in said reference frame using, for each reference block beyond the first, the sums from previous reference blocks to aid in the computation.

9.  The method of claim 2, said calculating step further comprising:
    calculating a truncated convolution of said current block and said portion of said reference frame.

10. The method of claim 2, said calculating step further comprising:

    discarding terms in said convolution for which said current block and said portion of said reference frame do not completely overlap; and
utilizing the remaining terms from said convolution to aid said searching step.

11. A method of obtaining motion vectors in an MPEG encoder comprising:

selecting a P-frame or I-frame from a group of pictures to be the reference frame;
selecting a B-frame or P-frame from said group of pictures to be the current frame;
partitioning said current frame and said reference frame from said group of pictures into blocks;
selecting a current block from said current frame;
calculating a convolution of said current block and at least a portion of said reference frame;
selecting for said current block a set of reference blocks from said portion of said reference frame; and
searching for a reference block, from said set of reference blocks, having a mean square error with said current block that is no larger than a mean square error between said current block and of any other reference block of said set of reference blocks.

12. The method of claim 11, further comprising data from said calculating step being utilized in said searching step.

13. The method of claim 12 in which said set of reference blocks includes each block within said reference frame.

14. The method of claim 12 in which said data is stored in a tabular form..

15. The method of claim 12, said searching step further comprising:

obtaining from said convolution calculation, for a plurality of reference blocks from said set of reference blocks, the inner product of said reference blocks and said current block;
calculating, for each reference block from said plurality of reference blocks, the squared norm of said reference block;
calculating, for each reference block from said plurality of reference blocks, the sum of said squared norm and the negative of twice said inner product; and
selecting a reference block, from said plurality of reference blocks, for which said sum is no larger than the sum obtained for any other reference block from said plurality of reference blocks.

16. The method of claim 15, in which said plurality of reference blocks includes each block from said set of reference blocks.

17. The method of claim 12, said calculating and storing step further comprising:

discarding terms in said convolution for which said current block and said reference frame do not completely overlap; and
utilizing the remaining terms from said convolution to aid said searching step.

18. The method of claim 12, said calculating step further comprising:
calculating a truncated convolution of said current block and said portion of said reference frame.

19. A data compression method of finding a first sub-image of a first image frame, said first sub-image corresponding to a second sub-image in a second image frame, said method comprising:

calculating a convolution of said second sub-image with at least a portion of said first image frame;
obtaining from said calculating step the inner product of a plurality of first image frame sub-images and said second sub-image;
calculating, for each of said plurality of first frame sub-images, the sum of the squared norm of said plurality of first frame sub-images and the negative of twice said inner product; and
selecting said first sub-image to be the sub-image for which said sum is no larger than the sum obtained for any other of said plurality of first frame sub-images.

20. The method of claim 19, said calculating a convolution step further comprising:

discarding terms in said convolution for which said second sub-image and said plurality of first frame sub-images do not completely overlap; and
utilizing the remaining terms from said convolution to aid said searching step.

**21.** The method of claim 19, said calculating a convolution step further comprising:
   calculating a truncated convolution.

**22.** A method for compressing moving image data using motion estimation vectors comprising:

   providing a reference image frame, said reference image frame being divided into a plurality of sub-images;
   providing a current image frame, said current image frame being divided into a plurality of current frame sub-images;
   selecting for at least one of said current frame sub-images a corresponding reference frame sub-image by identifying at least one reference frame sub-image that provides a minimum mean square error between current frame sub-images and said current frame sub-images; and
   determining said mean square error by performing a calculation comprising a running sum of squares and a convolution.

**23.** The method of claim 22, said convolution being a truncated convolution

**24.** The method of claim 22 wherein said minimuim is determined over a search region.

**25.** The method of claim 22, said convolution being the convolution of said current frame sub-image and said plurality of reference frame sub-images.

**26.** The method of claim 25, further comprising:

   discarding terms in said convolution for which said current frame sub-image and said plurality of reference frame sub-images do not completely overlap; and
   utilizing the remaing terms in said determining step.

**27.** The method of claim 22, said running sum of squares being the running sum of squares of said plurality of reference frame sub-images.

**28.** The method of claim 27, said convolution being the convolution of said current frame sub-image and said plurality of reference frame sub-images

Figure 1
(Prior Art)

Figure 2

Figure 3

| Mismatch Function | Search Window Size | | |
|---|---|---|---|
| | 31 | 47 | 63 |
| MSAD | 130,816 adds<br>65,791 compares | 523,264 adds<br>263,167 compares | 1,177,344 adds<br>592,127 compares |
| MSSD | 130,816 adds<br>256 compares<br>65,536 multiplies | 523,264 adds<br>1024 compares<br>262,144 multiplies | 1,177,344 adds<br>2304 compares<br>589,824 multiplies |
| MPDC | 65,536 adds<br>65,791 compares<br>65,536 increments | 262,144 adds<br>263,167 compares<br>262,144 increments | 589,824 adds<br>592,127 compares<br>589,824 increments |

Figure 4

| p | p' | | | | | $v_0$ | $v_1$ | $v_2$ | $v_3$ | | | . | . | |
|---|---|---|---|---|---|---|---|---|---|---|---|---|---|---|
| -2 | 0 | | | | | $r_0$ | $r_1$ | $r_2$ | $r_3$ | $r_4$ | $r_5$ | $r_6$ | $r_7$ | |
| -1 | 1 | | | | $r_0$ | $r_1$ | $r_2$ | $r_3$ | $r_4$ | $r_5$ | $r_6$ | $r_7$ | | |
| 0 | 2 | | | $r_0$ | $r_1$ | $r_2$ | $r_3$ | $r_4$ | $r_5$ | $r_6$ | $r_7$ | | | |
| 1 | 3 | | $r_0$ | $r_1$ | $r_2$ | $r_3$ | $r_4$ | $r_5$ | $r_6$ | $r_7$ | | | | |
| 2 | 4 | $r_0$ | $r_1$ | $r_2$ | $r_3$ | $r_4$ | $r_5$ | $r_6$ | $r_7$ | | | | | |

Figure 5

| $j$ | | | | | | | | $v_0$ | $v_1$ | $v_2$ | $v_3$ | | | | | | | |
|---|---|---|---|---|---|---|---|---|---|---|---|---|---|---|---|---|---|---|
| 0 | $r_0$ | $r_1$ | $r_2$ | $r_3$ | $r_4$ | $r_5$ | $r_6$ | $r_7$ | | | | | | | | | | |
| 1 | | $r_0$ | $r_1$ | $r_2$ | $r_3$ | $r_4$ | $r_5$ | $r_6$ | $r_7$ | | | | | | | | | |
| 2 | | | $r_0$ | $r_1$ | $r_2$ | $r_3$ | $r_4$ | $r_5$ | $r_6$ | $r_7$ | | | | | | | | |
| 3 | | | | $r_0$ | $r_1$ | $r_2$ | $r_3$ | $r_4$ | $r_5$ | $r_6$ | $r_7$ | | | | | | | |
| 4 | | | | | $r_0$ | $r_1$ | $r_2$ | $r_3$ | $r_4$ | $r_5$ | $r_6$ | $r_7$ | | | | | | |
| 5 | | | | | | $r_0$ | $r_1$ | $r_2$ | $r_3$ | $r_4$ | $r_5$ | $r_6$ | $r_7$ | | | | | |
| 6 | | | | | | | $r_0$ | $r_1$ | $r_2$ | $r_3$ | $r_4$ | $r_5$ | $r_6$ | $r_7$ | | | | |
| 7 | | | | | | | | $r_0$ | $r_1$ | $r_2$ | $r_3$ | $r_4$ | $r_5$ | $r_6$ | $r_7$ | | | |
| 8 | | | | | | | | | $r_0$ | $r_1$ | $r_2$ | $r_3$ | $r_4$ | $r_5$ | $r_6$ | $r_7$ | | |
| 9 | | | | | | | | | | $r_0$ | $r_1$ | $r_2$ | $r_3$ | $r_4$ | $r_5$ | $r_6$ | $r_7$ | |
| 10 | | | | | | | | | | | $r_0$ | $r_1$ | $r_2$ | $r_3$ | $r_4$ | $r_5$ | $r_6$ | $r_7$ |

EP 0 825 778 A2

Figure 6

| 2-D Convolution Algorithm | Search Window Size | | | |
|---|---|---|---|---|
| | 32/30 | 35 | 48 | 64/63 |
| Direct Convolution | 262,144 m 230,400 a | 313,600 m 275,625 a | 589,824 m 518,400 a | 1,048,576 m 921,600 a |
| Radix-2 Row/Column Cooley-Tukey FFT | 23,036 m 51,700 a | | | 110,588 m 249,844 a |
| Optimized Row/Column Cooley-Tukey FFT | 8,700 m 37,364 a | | | 51,196 m 190,452 a |
| Row/Column Winograd FT Algorithm | 11,066 m 53,178 a | 18,844 m 106,720 a | 26,780 m 140,820 a | 62,082 m 405,110 a |
| Nested Winograd FT Algorithm | 5,234 m 39,354 a | 10,582 m 90,736 a | 12,200 m 100,752 a | 35,352 m 348,085 a |
| Split-Radix FFT | 8,060 m 33,012 a | | | 43,772 m 167,412 a |
| Nussbaumer-Quandalle FFT | 4,682 m 41,406 a | 7,876 m 92,546 a | 11,396 m 92,220 a | 26,422 m 313,322 a |

21